# FASCICULE DE BREVET EUROPEEN

(11) **EP 2 021 226 B1**
(45) Date de publication et mention de la délivrance du brevet: **10.03.2010**
(21) Numéro de dépôt: 07731425.0
(22) Date de dépôt: 09.05.2007
(51) Int. Cl.: B62D 25/14, B62D 29/00

(54) **TRAVERSE DE PLANCHE DE BORD DE VEHICULE AUTOMOBILE**
KRAFTFAHRZEUGARMATURENBRETTQUERTRÄGER
MOTOR VEHICLE INSTRUMENT PANEL CROSS-MEMBER

(30) Priorité: 24.05.2006 FR 0604695
(43) Date de publication de la demande: 11.02.2009
(73) Titulaire: Faurecia Interieur Industrie, 92000 Nanterre (FR)
(72) Inventeur: BAUDART, Laurent, 60530 Fresnoy En Thelle (FR)
(74) Mandataire: Jacobson, Claude
(86) Numéro de dépôt international: PCT/FR2007/000783
(87) Numéro de publication internationale: WO 2007/135262

(56) Documents cités:
- EP-A- 1 529 720
- EP-A- 1 544 086
- EP-A- 1 621 453
- DE-A1-102004 056 102
- DE-A1-102005 012 816
- US-A1- 2005 134 090

## Description

L'invention concerne en général une traverse de planche de bord de véhicule automobile

Plus précisément, l'invention concerne une traverse de planche de bord de véhicule automobile selon le préambule de la revendication 1.

Une telle traverse est connue de DE-A-10 2004 056102 et EP-A-1 544 086.

On connaît également des traverses pourvues chacune d'une poutre tubulaire, fixée au véhicule par des étriers rapportés aux deux extrémités de la poutre.

Cette traverse présente donc une rupture d'inertie entre la poutre et les étriers de fixation. Pour compenser cette perte d'inertie, les étriers de fixation sont fortement soudés sur la poutre. Cette soudure est coûteuse et longue à réaliser.

Dans ce contexte, l'invention vise à proposer une traverse de planche de bord qui soit rigide tout en étant moins coûteuse à produire.

A cette fin, L'invention porte sur une traverse de planche de bord de véhicule automobile du type ci-dessus, **caractérisée en ce que** la platine est venue de matière avec la poutre.

La traverse peut également présenter une ou plusieurs des caractéristiques ci- dessous, considérées individuellement ou selon toutes les combinaisons techniquement possibles :
- les moyens de fixation comprennent deux platines longitudinales, ces platines étant disposées de part et d'autre de la poutre et portant chacune au moins un orifice de fixation ;
- la ou chaque platine s'étend sensiblement sur toute la longueur de la poutre ;
- la traverse est obtenue par cintrage et soudage d'une bande métallique, le ou chaque orifice de fixation étant formé dans la bande métallique avant cintrage ;
- la bande métallique est soudée bord à bord sur toute la longueur longitudinale de la traverse;
- dans la ou chaque platine, la bande métallique est pliée en deux épaisseurs séparées par une lame d'air d'épaisseur Inférieure à deux fois l'épaisseur de la bande métallique;
- dans la ou chaque platine, les deux épaisseurs de la bande métallique sont soudées l'une à l'autre sur toute la longueur longitudinale de la traverse ;
- la soudure bord à bord passe dans la poutre;
- la bande métallique présente une épaisseur variable longitudinalement le long de la traverse ;
- la traverse est obtenue par hydroformage ou par injection de métal ;
- la poutre présente une section transversale trapézoïdale ;
- la traverse présente une section transversale en chapeau, et présente une première grande face sensiblement plane et une seconde grande face opposée à la première sur laquelle poutre fait saillie ;
- la poutre présente une section transversale circulaire ;
- la traverse présente une section transversale variable quand on parcourt la traverse longitudinalement ;
- la traverse comprend au moins deux tronçons longitudinaux présentant des sections transversales respectives constantes et différentes l'une de l'autre.
- lesdits deux tronçons longitudinaux de la traverse présentent des sections transversales respectives de formes différentes ; et
- lesdits deux tronçons longitudinaux de la traverse présentent des sections transversales présentant des positions différentes dans un plan perpendiculaire à la direction longitudinale.

D'autres caractéristiques et avantages de l'invention ressortiront de la description qui en est donnée ci-dessous, à titre indicatif et nullement limitatif, en référence aux figures annexées, parmi lesquelles :
- la figure 1 est une vue en perspective d'une traverse de planche de bord conforme à l'invention ;
- les figures 2 et 3 sont des vues en coupe transversale de la traverse de la figure 1, illustrant deux variantes de réalisation du soudage de la poutre ;
- la figure 4 est une vue en perspective similaire à celle de la figure 1 montrant une variante de réalisation de la traverse dans laquelle celle-ci est adaptée pour recevoir intérieurement un conduit de ventilation du véhicule ;
- la figure 5 est une représentation graphique de l'épaisseur de la bande métallique formant la traverse, dans les zones longitudinales I à VI de la traverse matérialisées sur la figure 1 ;
- la figure 6 est une vue en coupe transversale d'un moule d'hydroformage dans lequel on a placé une ébauche de la traverse ;
- la figure 7 est une vue similaire à celle de la figure 6, après l'opération d'hydroformage de l'ébauche ;
- la figure 8 est une vue en perspective d'une autre forme de réalisation de la traverse ;
- la figure 9 est une vue en perspective d'une autre forme de réalisation de la traverse ; et
- les figures 10 et 11 sont des vues en coupe transversale de la traverse de la figure 9 considérées respectivement selon l'incidence des flèches X et XI.

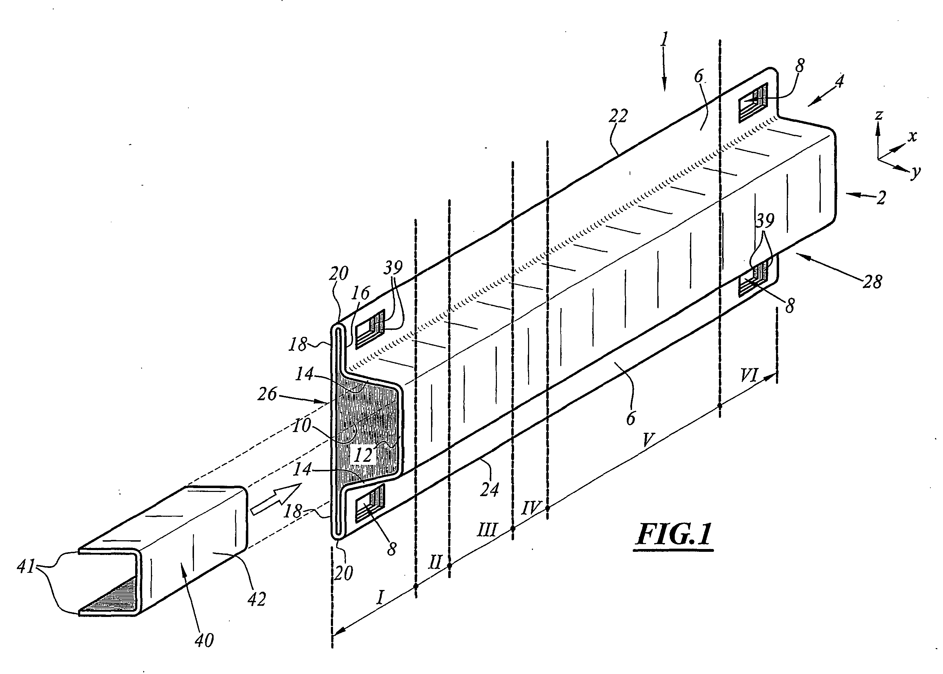

Dans la description qui va suivre, on fera référence à des directions longitudinale, transversale et verticale, orthogonales deux à deux, matérialisées par les flèches X, Y et Z de la figure 1.

La traverse 1 représentée sur la figure 1 est destinée à former un élément de structure d'une planche de bord de véhicule automobile. Elle s'étend le long de la direction longitudinale X. Elle comprend une poutre 2 longitudinale et des moyens de fixation 4 de la poutre 2 sur la structure du véhicule.

Les moyens de fixation 4 comprennent deux platines 6 latérales longitudinales s'étendant de part et d'autre de la poutre 2, et des orifices 8 traversant les platines 6. Un orifice 8 est ménagé à chaque extrémité longitudinale de chaque platine 6.

Selon un premier mode de réalisation, la traverse 1 est obtenue à partir d'une bande métallique plane longitudinale. La bande métallique est cintrée autour de lignes de pliage longitudinales, de manière à obtenir un profilé creux de section transversale prédéterminée. La traverse 1 présente une même section transversale sur toute sa longueur longitudinale. A la fin de l'opération de cintrage, les deux bords libres longitudinaux opposés de la bande métallique sont disposés en regard l'un de l'autre, à proximité immédiate l'un de l'autre. Ces bords sont ensuite soudés l'un à l'autre, comme décrit plus loin, de manière à augmenter la rigidité de la traverse.

Comme le montre la figure 1, la poutre 2 est creuse. Elle présente une section transversale sensiblement trapézoïdale. La poutre 2 est délimitée par une grande base 10 sensiblement longitudinale et verticale, une petite base 12 également sensiblement longitudinale et verticale, et deux faces obliques opposées 14 s'étendant dans des plans longitudinaux légèrement inclinés par rapport à la direction transversale Y.

Dans chacune des deux platines 6, la bande métallique est pliée en deux épaisseurs séparées par une lame d'air d'épaisseur inférieure à deux fois l'épaisseur de la bande métallique. Chaque platine 6 présente donc une section transversale en U. Chaque platine 6 comprend une branche 16 sensiblement longitudinale verticale raccordée à une face oblique 14, une branche 18 sensiblement longitudinale verticale raccordée à la grande base 10, et une partie cintrée 20 réunissant les branches 16 et 18. La partie cintrée 20 est tournée à l'opposé de la poutre 2. La partie cintrée 20 d'une des platines 6 définit donc un bord longitudinal libre supérieur 22 de la traverse. La partie cintrée 20 de l'autre platine 6 définit un bord libre longitudinal inférieur 24 de la traverse.

Les bras 18 des deux platines 6 et la grande base 10 de la poutre 2 s'étendent dans un même plan et définissent donc une première grande face 26 de la traverse. Cette face 26 est sensiblement plane et s'étend dans un plan longitudinal vertical.

Les branches 16 des deux platines, les faces inclinées 14 et la petite base 12 de la poutre définissent une seconde grande face de la traverse, référencée 28. La poutre 2 fait saillie au centre de la seconde grande face 28. Les branches 16 des deux platines sont disposées dans un même plan longitudinal vertical.

La traverse 1 est donc symétrique par rapport à un plan longitudinal transversal médian de la poutre 2.

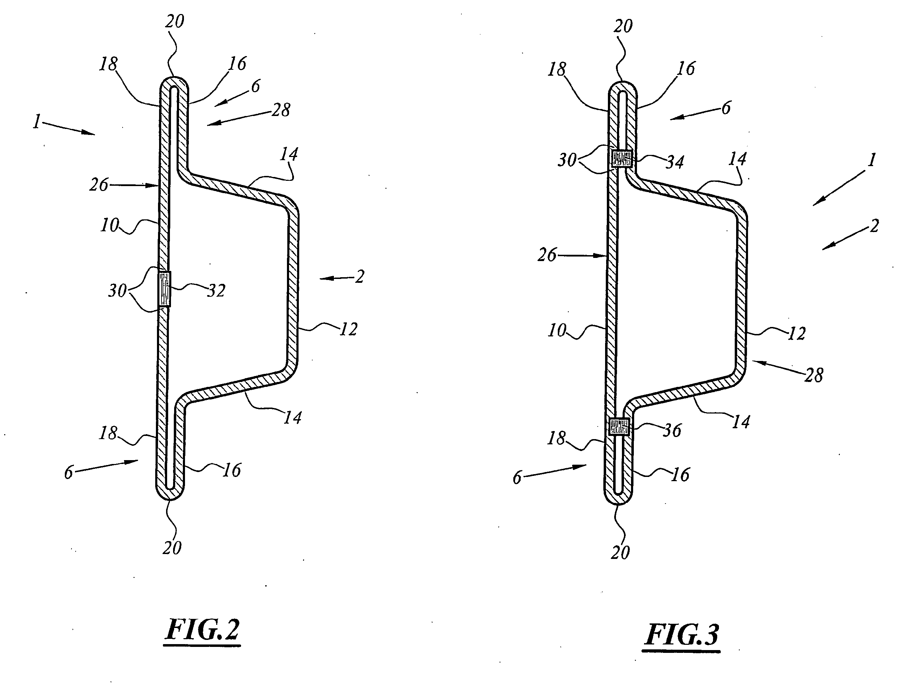

Selon un premier exemple de réalisation, illustré sur la figure 2, les bords longitudinaux 30 de la bande métallique formant la traverse, après cintrage, s'étendent au centre de la grande face 26. Ils sont solidarisés l'un à l'autre par une soudure continue s'étendent sur toute la longueur longitudinale de la traverse. Cette soudure est réalisée par exemple à l'aide d'un appareil de soudage à haute fréquence.

Dans un second exemple de réalisation, représenté sur la figure 3, les bords longitudinaux 30 de la bande métallique, après cintrage, s'étendent sur la première grande face 26, à la jonction entre la branche 18 de la platine supérieure 6 avec la grande base 10 de la poutre. Les bords 30 sont solidarisés l'un à l'autre par une soudure longitudinale. De préférence, cette soudure s'étend sur toute la longueur longitudinale de la traverse. En variante, la soudure n'est réalisée qu'aux deux extrémités longitudinales opposées de la traverse, par exemple sur 25 % de la longueur longitudinale de la traverse à chaque extrémité. La soudure 34 solidarise également les bords longitudinaux 30 de la bande avec la branche 16 de la platine 6, conférant ainsi une section fermée à la platine 6 sur au moins une partie de sa longueur longitudinale. Une seconde soudure 36 est ménagée le long de la platine inférieure 6. Elle solidarise les branches 16 et 18 de la platine inférieure 6. Elle s'étend par exemple le long de la ligne de jonction entre la branche 18 et la grande base 10 de la poutre 2. Les soudures 34 et 36 sont typiquement réalisées à l'aide d'un appareil de soudage par laser.

Comme indiqué précédemment, un orifice 8 est ménagé à chaque extrémité longitudinale de chaque platine 6. Ces orifices 8 traversent les branches 16 et 18 de la platine correspondante. Les orifices 8 sont aptes à recevoir des vis (non représentées) de fixation de la traverse 1 sur la structure du véhicule.

De manière particulièrement avantageuse, les quatre orifices 8 sont formés en pratiquant dans la bande métallique, avant cintrage, huit trous 39 à des positions prédéterminées. Après cintrage, les trous 39 sont disposés en coïncidence deux à deux, par paires. Un trou d'une paire est situé dans la branche 16 d'une platine et l'autre trou de la même paire dans la branche 18 de la même platine. Les quatre paires de trous 39 sont disposés aux deux extrémités longitudinales des platines 6 et forment les quatre orifices 8.

En variante, la traverse peut comprendre un ou des renforts intérieurs locaux 40. Ces renforts 40 sont typiquement des profilés métalliques en U, disposés à l'intérieur de la poutre centrale creuse 2. Ces renforts sont susceptibles d'être glissés dans la poutre 2 à partir d'une extrémité longitudinale de la traverse. Les bords libres 41 du profilé 40 sont en appui sur la grande base 10 de la poutre, tandis que l'âme 42 du profilé est en appui sur la petite base 12 de cette même poutre.

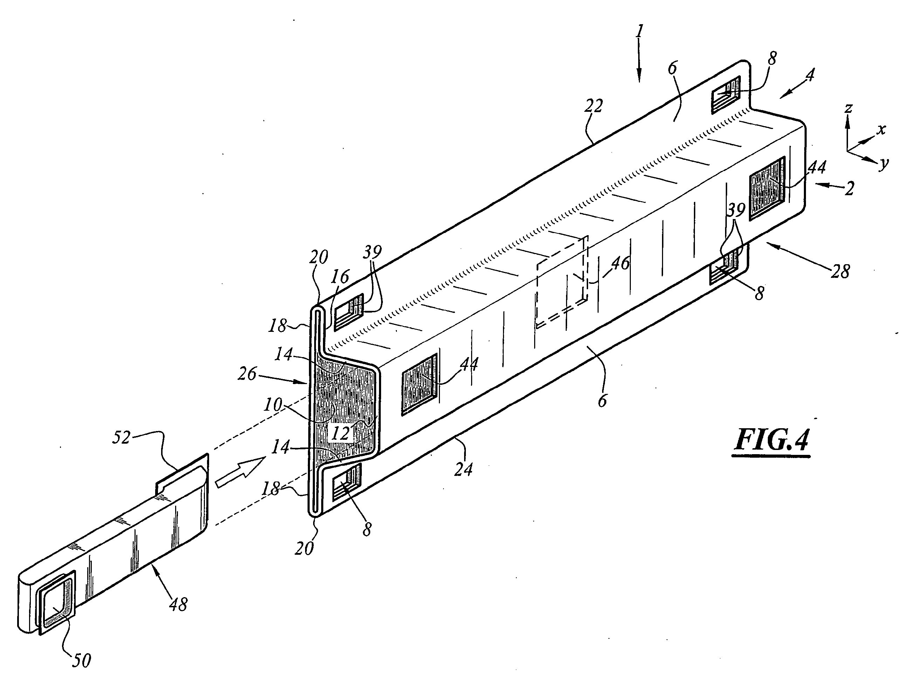

Comme illustré sur la figure 4, la poutre 2 peut comporter des ouvertures 44 sur sa petite base 10, et d'autres ouvertures 46 sur sa grande base 12. Par exemple, deux ouvertures 44 peuvent être ménagées aux deux extrémités longitudinales opposées de la petite base 12. Une ouverture 46 peut être ménagée au centre de la grande base 10. La traverse 1 est ainsi apte à recevoir à l'intérieur de la poutre 2 deux conduits de ventilation 48 présentant chacun une entrée d'air et une sortie d'air, respectivement 50 et 52. Le conduit 48 est disposé de manière à s'étendre longitudinalement le long de la poutre 2, l'entrée d'air 50 étant disposée en coïncidence avec l'ouverture 44 et la sortie d'air 52 en coïncidence avec l'ouverture 46.

De manière particulièrement avantageuse, la bande métallique formant le profilé présente une épaisseur variable longitudinalement le long de la traverse 1.

Sur la figure 1, la traverse a été subdivisée en six tronçons successifs numérotés successivement de I à VI. Les tronçons I et VI portent les orifices 8 de fixation de la traverse sur la structure du véhicule. Le tronçon III est apte à supporter la colonne de direction. Par ailleurs, la traverse 1 est apte à être supportée par une jambe de force (non représentée) reposant sur le plancher du véhicule. Des moyens (non représentés) de fixation de la traverse 1 sur ladite jambe de force sont prévus en un point situé à la limite entre les tronçons IV et V.

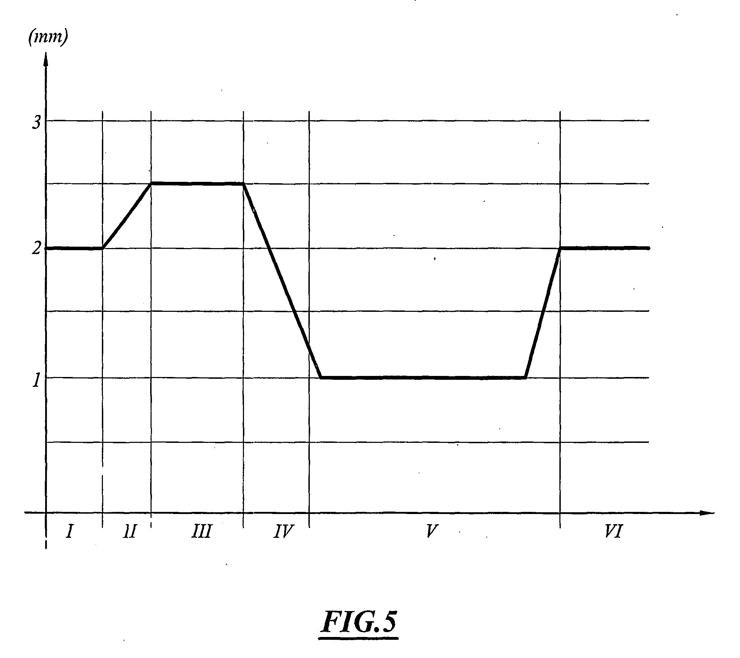

Comme le montre la figure 5, la bande métallique présente une épaisseur de 2 mm dans les tronçons I et VI. Elle présente une épaisseur de 2,5 mm dans le tronçon III, et une épaisseur de 1 mm dans pratiquement tout le tronçon V. La bande présente une épaisseur croissante dans le tronçon II, passant de 2 mm à proximité du tronçon I à 2,5 mm à la jonction avec le tronçon III. Inversement, la bande présente une épaisseur décroissante le long du tronçon IV, passant de 2,5 mm à la jonction avec le tronçon III à 1 mm à la jonction avec le tronçon V. Enfin, le tronçon V présente, à proximité du tronçon VI, une épaisseur croissante de 1 mm à 2 mm.

La traverse décrite ci-dessus présente de multiples avantages.

Le fait que les platines de fixation de la traverse soient venues de matière avec la poutre centrale permet de conférer une forte rigidité à la traverse puisqu'il n'y a pas de rupture d'inertie entre la poutre et les moyens de fixation.

Par ailleurs, les trous de fixation sont percés dans la bande métallique formant la traverse avant cintrage, à des positions telles qu'ils soient disposés dans les deux platines après cintrage.

Ainsi, il n'est pas nécessaire de souder des moyens de fixation rapportés sur la poutre centrale, ce qui rend la traverse particulièrement simple de fabrication.

De plus, il est possible de disposer des renforts à l'intérieur de la partie centrale creuse, en fonction des besoins.

La traverse présente également l'avantage de pouvoir recevoir des conduits aérauliques de ventilation du véhicule.

Il est également possible de faire varier l'épaisseur de la bande métallique longitudinalement le long de la traverse, de manière à adapter la résistance de chaque tronçon de cette traverse aux contraintes qui s'exercent sur ledit tronçon. On réalise ainsi un gain de masse appréciable.

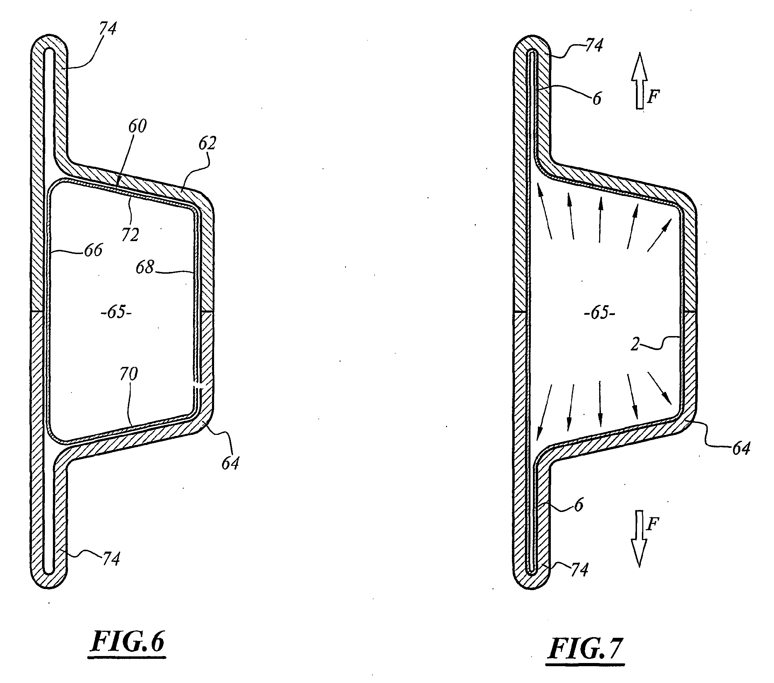

Dans un second mode de réalisation, la traverse 1 peut être réalisée par hydroformage, comme représenté sur les figures 6 et 7.

Comme illustré sur la figure 6, une ébauche 60 de la traverse 1 est disposée entre deux empreintes 62, 64 d'un moule, définissant entre elles une cavité 65 présentant une forme correspondant à la forme souhaitée pour la traverse. L'ébauche 60 possède par exemple initialement une section transversale trapézoïdale à parois 66, 68, 70, 72 lisses.

La cavité 65 possède une section de forme générale sensiblement analogue à celle de l'ébauche 60 en étant de dimensions légèrement supérieures.

Les empreintes 62, 64 possèdent des parties oblongues en saillie vers l'extérieur du moule, disposées en vis-à-vis et prévues pour former les platines 6.

De façon connue en soi, et comme illustré sur la figure 7, lors d'une étape d'hydroformage, un liquide sous pression est introduit à l'intérieur de l'ébauche 60.

Le liquide sous pression déforme et plaque l'ébauche 60 sur les parois internes de la cavité 65, de sorte que l'ébauche 60 adopte la forme de la cavité 65.

L'ébauche 60 est légèrement déformée dans les régions dans lesquelles la cavité 65 présente une section sensiblement analogue à celle de l'ébauche 60.

Au niveau des évidements 74, les parois 70, 72 de l'ébauche 60 sont déformées dans une plus grande mesure pour former les platines 6.

A l'issue de l'étape d'hydroformage, l'ébauche 60 présente la forme générale de la traverse 1.

Les empreintes 62 et 64 sont ensuite séparées l'une de l'autre suivant un mouvement représenté par les flèches F de la figure 7 et la traverse 1 est extraite du moule. Enfin, les orifices de fixation 8 sont pratiqués par poinçonnement des platines 6.

Selon un autre mode de réalisation, la traverse est réalisée par injection de métal dans un moule présentant une cavité intérieure de la forme de la traverse 1. On utilise dans ce cas des métaux tels que l'aluminium ou le magnésium. Les trous de fixation 8 sont venus de moulage ou sont réalisés par poinçonnement, à l'extérieur du moule.

La traverse décrite ci-dessus peut présenter de multiples variantes.

Sa section transversale peut ne pas présenter une forme de chapeau.

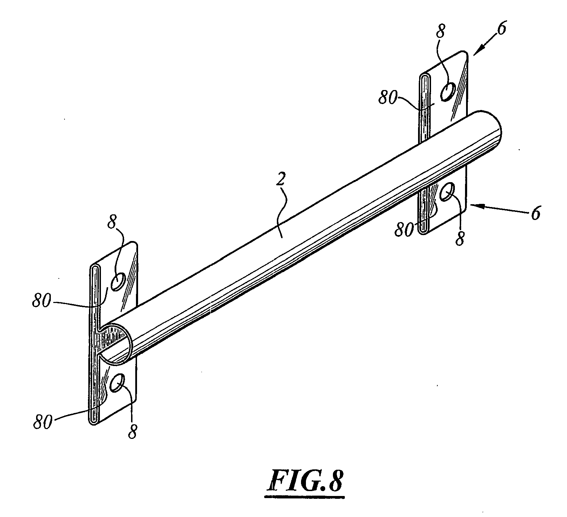

La poutre 2 peut, comme représenté sur la figure 8, présenter une section transversale circulaire. Dans ce cas, les platines 6 sont placées de part et d'autre de la poutre 2 dans un plan vertical longitudinal tangent à la poutre 2. Ces platines peuvent, par exemple, être formées conformément au procédé décrit dans la demande de brevet déposée sous le numéro FR 05 03489. Ce procédé prévoit une première étape d'hydroformage, au cours de laquelle sont formées la poutre 2, et une ébauche des platines en saillie par rapport à la poutre 2. L'ébauche présente la forme d'une nervure longitudinale. Puis, au cours d'une seconde étape, l'ébauche est déformée à l'aide d'un poinçon appliqué sur l'extrémité libre de la nervure, pour l'écraser vers la poutre. L'ébauche est aplatie, développant ainsi deux ailes perpendiculairement à la direction de déplacement du poinçon. Chaque aile est constituée d'un pli de matière en U et forme une des platines 6.

La poutre 2 peut alternativement présenter une section transversale carrée, rectangulaire, elliptique, ou toute autre section permettant d'obtenir la résistance mécanique recherchée pour la traverse.

Les platines 6 peuvent ne pas s'étendre sur toute la longueur longitudinale de la poutre 2.. Elles peuvent par exemple, comme illustré sur la figure 8, être chacune constituée de deux ailes longitudinales 80, placées aux deux extrémités opposées de la poutre 2, chacune percée d'un orifice de fixation 8.

Chaque aile 80 s'étend sur une longueur longitudinale fonction de la rigidité recherchée pour la traverse.

De telles platines 6 formées de deux ailes peuvent être obtenues par exemple par hydroformage ou injection de métal.

En variante, chaque platine 6 peut comporter, en plus des deux ailes 80 disposées aux extrémités de la poutre, une ou plusieurs autres ailes longitudinales situées le long d'une partie centrale de la poutre 2.

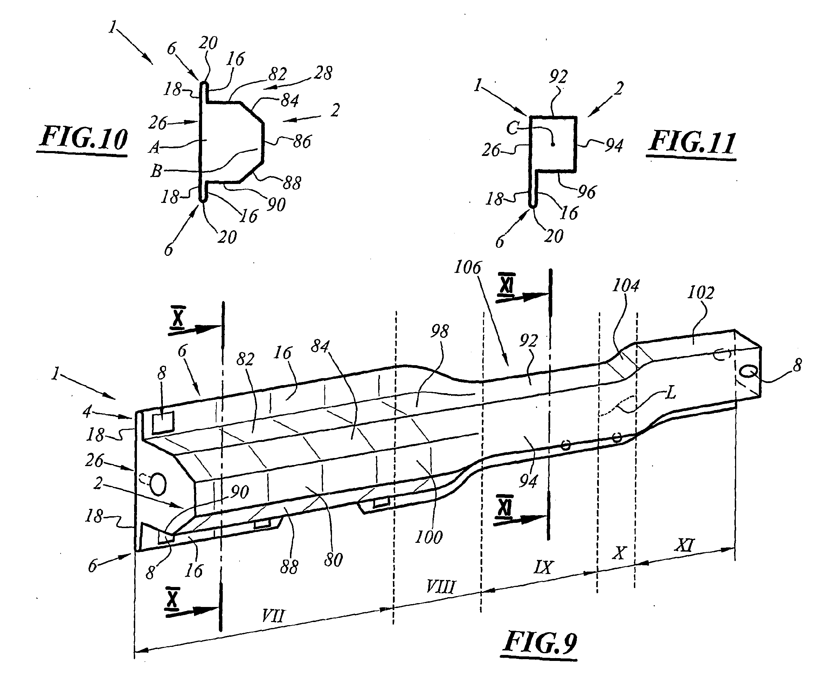

Selon une autre variante de réalisation représentée sur les figures 9 à 11, la traverse 1 présente une section transversale qui varie quand on parcourt la traverse longitudinalement.

Sur la figure 9, la traverse 1 a été subdivisée en cinq tronçons longitudinaux successifs, numérotés respectivement de VII à XI.

Le tronçon VII correspond à la partie gauche de la traverse, et s'étend longitudinalement sur environ deux cinquièmes de la longueur de cette traverse. Le tronçon XI correspond à la partie droite de la traverse, et s'étend sur environ un cinquième de la longueur longitudinale de la traverse. Les tronçons VIII et X sont des tronçons de transition, relativement courts, et s'étendent ensemble sur environ un cinquième de la longueur longitudinale de la traverse. Le tronçon IX s'étend sur environ un cinquième de la longueur longitudinale de la traverse.

La traverse 1 présente une section transversale constante le long de toute la longueur longitudinale de chacun des tronçons VII, IX et XI.

La section transversale du tronçon VII est représentée sur la figure 10.

La traverse comprend dans le tronçon VII deux platines 6 similaires aux platines de la traverse représentée sur les figures 1 à 3 et une poutre 2. La poutre 2, considérée en section, présente, à partir de la première grande face 26 de la traverse, une zone rectangulaire A prolongée par une zone trapézoïdale B. La poutre 2 est donc délimitée vers le haut de la figure 10 par une face 82 sensiblement perpendiculaire à la branche 16 de la platine supérieure, puis par une face oblique 84, puis par une face 86 parallèle à la première grande face 26 de la traverse, puis par une seconde face oblique 88, puis par une face 90 se raccordant sur la branche 16 de la platine inférieure et s'étendant sensiblement perpendiculairement à ladite branche 16. Les faces 84 et 88 convergent vers la face 86, ladite face 86 constituant ainsi la petite base de la partie trapézoïdale B de la poutre.

La section transversale du tronçon IX est représentée sur la figure 11. La traverse 1, dans ce tronçon, est dépourvue de platine supérieure et ne comporte qu'une platine 6 inférieure similaire à la platine inférieure du tronçon VII. La poutre 2 présente une section rectangulaire, légèrement plus petite que la zone A de la section du tronçon VII. La poutre 2 est délimitée vers le haut de la figure 11 par une face 92 perpendiculaire à la première grande face 26 de la traverse, prolongée par une face 94 parallèle à la première grande face 26, prolongée par une face 96 perpendiculaire à la première grande face et se raccordant sur la branche 16 de la platine inférieure. La hauteur de la poutre 2 du tronçon 9, c'est-à-dire l'écartement entre les faces 92 et 96, est plus faible que la hauteur de la poutre 2 dans le tronçon VII, cette hauteur correspondant à l'écartement entre les faces 82 et 90.

La forme de la section de la traverse, dans le tronçon XI, est sensiblement identique à celle du tronçon IX.

Le tronçon VIII est un tronçon de transition entre les tronçons VII et IX. La section transversale de la traverse varie de manière continue le long du tronçon VIII et passe progressivement de la forme représentée sur la figure 10 et correspondant à la section du tronçon VII, à la forme représentée sur la figure 11 et correspondant à la section transversale du tronçon IX.

La poutre 2, dans le tronçon VIII, est délimitée vers le haut de la figure 9 par une face plane 98 assurant la liaison entre la face 82 et la face 92, les faces 82, 92 et 98 s'étendant dans un même plan.

La poutre 2, dans le tronçon VIII, est délimitée à l'opposé de la première grande face 26 par une face 100 qui prolonge longitudinalement les faces 84, 86 et 88 du tronçon VII. La face 100 s'aplatit progressivement jusqu'à la face 94 du tronçon IX. La poutre 2 est délimitée vers le bas de la figure 9 par une surface non visible, qui relie la face 90 du tronçon VII à la face 96 du tronçon IX. La face 96 est située plus haut que la face 90, de telle sorte que la face inférieure de la poutre dans le tronçon VIII possède sensiblement un profil en S. Par ailleurs, la platine supérieure 6, dans le tronçon VIII, s'aplatit à partir du tronçon VII et disparaît à la jonction entre les tronçons VIII et IX. La platine inférieure 6 présente, dans le tronçon VIII un profil en S montant à partir du tronçon VII jusqu'au tronçon IX.

Le tronçon X est également un tronçon de transition entre les tronçons IX et XI. La traverse présente le long du tronçon X une section de forme constante mais de position verticale variable le long du tronçon X, la section se décalant progressivement vers le haut. Ainsi, le centre géométrique C de la section de la poutre 2 se déplace le long d'une ligne L en forme de S, visible sur la figure 9, quand on suit longitudinalement le tronçon X.

On ménage ainsi une forme en creux 10B au-dessus du tronçon IX de la traverse, apte à recevoir par exemple un module de coussin gonflable. Cette forme en creux 106 est délimitée vers la droite par la face supérieure 104 du tronçon X et vers la gauche par le segment de la platine supérieure 6 se trouvant dans le tronçon VIII et s'aplatissant progressivement. Le module de coussin gonflable peut être entièrement logé dans la zone en creux 106, sans dépasser vers le haut au-dessus de la face supérieure 102 du tronçon XI ou au-dessus de la platine supérieure 6 du tronçon VII.

Il est possible de prévoir dans la traverse 1 d'autres changements de forme et/ou de position de la section transversale permettant, sans modifier les capacités mécaniques ou structurelles de la traverse, de dégager des volumes en vue de loger d'autres éléments. Ces éléments peuvent être par exemple un autre module de coussin gonflable, la colonne de direction, des organes d'affichage de paramètres de fonctionnement du véhicule, des organes de commande du véhicule ou tout autre équipement analogue.

Par ailleurs, il est possible de prévoir dans la zone en creux 106 ou dans toute autre zone en creux destinée à un autre élément, une platine de fixation venue de matière avec la poutre, similaire à la platine de fixation 6 prévue pour la fixation du module de coussin gonflable ou de tout autre élément destiné à être disposé dans la zone en creux.

Le fait que la traverse présente une section transversale variable quand on la parcourt longitudinalement, permet d'optimiser le poids et l'encombrement de la traverse, en fonction de la résistance mécanique recherchée pour la travers, en fonction de l'espace disponible à bord du véhicule, et en fonction des composants à loger à bord du véhicule. On appelle ici variation de section, soit une variation dans a forme de la section, comme le long du tronçon VIII, soit une variation dans la position de la section dans un plan perpendiculaire à la direction transversale, comme le long du tronçon X.

La traverse de la figure 9 peut être obtenue, comme décrit précédemment, à partir d'une bande métallique plane longitudinale. Cette bande subit plusieurs opérations successives d'emboutissage, chaque opération permettant de cintrer la bande métallique autour d'une ou plusieurs lignes de pliage longitudinales, et également de mettre en forme les faces de la traverse dans les tronçons VIII et X.

La traverse peut présenter plus ou moins de trois tronçons de sections transversales respectives constantes, séparées les uns des autres par un ou plusieurs tronçons de sections transversales variables.

Les tronçons de sections constantes et variables peuvent présenter des longueurs longitudinales différentes des valeurs indiquées ci-dessus. Par exemple, chaque tronçon de section transversale constante présente une longueur supérieure à 1/8^{e} de la longueur longitudinale de la traverse. Par exemple, chaque tronçon de section transversale variable présente une longueur supérieure à 1/10^{e} de la longueur longitudinale de la traverse.

## Revendications

1. Traverse (1) de planche de bord de véhicule automobile, du type comprenant une poutre (2) s'étendant sensiblement le long d'une direction longitudinale et au moins une platine (6) venue de matière avec la poutre (2), la traverse (1) étant obtenue à partir d'une bande métallique, **caractérisée en ce qu'**elle comprend des moyens (4) de fixation de la poutre (2) sur la structure du véhicule comprenant au moins ladite platine (6) pourvue d'au moins un orifice de fixation (8), et **en ce que** dans la ou chaque platine (6), la bande métallique est pliée en deux épaisseurs séparées par une lame d'air d'épaisseur inférieure à deux fois l'épaisseur de la bande métallique.

2. Traverse selon la revendication 1 , **caractérisée en ce que** les moyens (4) de fixation comprennent deux platines longitudinales (6), ces platines (6) étant disposées de part et d'autre de la poutre (2) et portant chacune au moins un orifice de fixation (8).

3. Traverse selon la revendication I ou 2, **caractérisée en ce que** la ou chaque platine (6) s'étend sensiblement sur toute la longueur de la poutre (2).

4. Traverse selon l'une quelconque des revendications 1 à 3, **caractérisée en ce qu'**elle est obtenue par cintrage et soudage d'une bande métallique, le ou chaque orifice de fixation (8) étant formé dans la bande métallique avant cintrage.

5. Traverse selon la revendication 4, **caractérisée en ce que** la bande métallique est soudée bord à bord sur toute la longueur longitudinale de la traverse (1).

6. Traverse selon l'une quelconque des revendications 4 ou 5, **caractérisée en ce que**, dans la ou chaque platine (6), les deux épaisseurs de la bande métallique sont soudées l'une à l'autre sur toute la longueur longitudinale de la traverse (1).

7. Traverse selon la revendication 5, **caractérisée en ce que** la soudure bord à bord passe dans la poutre (2).

8. Traverse selon l'une quelconque des revendications précédentes, **caractérisée en ce que** la bande métallique présente une épaisseur variable longitudinalement le long de la traverse (1).

9. Traverse selon l'une quelconque des revendications 1 à 8, **caractérisée en ce que** la poutre (2) présente une section transversale trapézoïdale.

10. Traverse selon la revendication 9 , **caractérisée en ce qu'**elle présente une section transversale en chapeau, et présente une première grande face (26) sensiblement plane et une seconde grande face (28) opposée à la première sur laquelle la poutre (2) fait saillie.

11. Traverse selon l'une quelconque des revendications 1 à 8, **caractérisée en ce que** la poutre (2) présente une section transversale circulaire.

12. Traverse selon l'une quelconque des revendications précédentes, **caractérisée en ce que** la traverse (1) présente une section transversale variable quand on parcourt la traverse (1) longitudinalement.

13. Traverse selon la revendication 12, **caractérisée en ce que** la traverse (1) comprend au moins deux tronçons longitudinaux (VII, IX, XI) présentant des sections transversales respectives constantes et différentes l'une de l'autre.

14. Traverse selon la revendication 13, **caractérisée en ce que** lesdits deux tronçons longitudinaux (VII, IX) de la traverse (1) présentent des sections transversales respectives de formes différentes.

15. Traverse selon la revendication 14, **caractérisée en ce que** lesdits deux tronçons longitudinaux (IX, XI) de la traverse (1) présentent des sections transversales présentant des positions différentes dans un plan perpendiculaire à la direction longitudinale.

## Claims

1. Cross-member (1) of a motor vehicle instrument panel, of the type comprising a beam (2) extending substantially in a longitudinal direction and at least one plate (6) integrally formed with the beam (2), the cross-member (1) being obtained from a metal strip, **characterised in that** it comprises means (4) for fixing the beam (2) to the structure of the vehicle, comprising at least said plate (6) provided with at least one fixing hole (8), and **in that**, in the or each plate (6), the metal strip is bent into two thicknesses separated by an air gap the thickness of which is less than twice the thickness of the metal strip.

2. Cross-member according to claim 1, **characterised in that** the fixing means (4) comprise two longitudinal plates (6), these plates (6) being arranged on either side of the beam (2) and each having at least one fixing hole (8).

3. Cross-member according to claim 1 or 2, **characterised in that** the or each plate (6) extends over substantially the entire length of the beam (2).

4. Cross-member according to any one of claims 1 to 3, **characterised in that** it is obtained by bending and welding a metal strip, the or each fixing hole (8) being formed in the metal strip before bending.

5. Cross-member according to claim 4, **characterised in that** the metal strip is welded edge to edge over the entire longitudinal length of the cross-member (1).

6. Cross-member according to any one of claims 4 or 5, **characterised in that** in the or each plate (6) the two thicknesses of the metal strip are welded to one another over the entire longitudinal length of the cross-member (1).

7. Cross-member according to claim 5, **characterised in that** the edge to edge welding continues into the beam (2).

8. Cross-member according to any one of the preceding claims, **characterised in that** the metal strip has a longitudinally variable thickness along the cross-member (1).

9. Cross-member according to any one of claims 1 to 8, **characterised in that** the beam (2) has a trapezoidal cross-section.

10. Cross-member according to claim 9, **characterised in that** it has a hat-shaped cross-section and has a first substantially planar main surface (26) and a second main surface (29) opposite the first, onto which the beam (2) projects.

11. Cross-member according to any one of claims 1 to 8, **characterised in that** the beam (2) has a circular cross-section.

12. Cross-member according to any one of the preceding claims, **characterised in that** the cross-member (1) has a variable cross-section along the longitudinal extent of the cross-member (1).

13. Cross-member according to claim 12, **characterised in that** the cross-member (1) has at least two longitudinal portions (VII, IX, XI) having respective cross-sections that are constant and different from one another.

14. Cross-member according to claim 13, **characterised in that** the said two longitudinal portions (VII, IX) of the cross-member (1) have respective cross-sections of different shapes.

15. Cross-member according to claim 14, **characterised in that** the said two longitudinal portions (IX, XI) of the cross-member (1) have cross-sections occupying different positions in a plane perpendicular to the longitudinal direction.

## Patentansprüche

1. Querträger (1) eines Kraftfahrzeugarmaturenbretts des Typs, der einen Träger (2), der sich im Wesentlichen entlang einer Längsrichtung erstreckt, und mindestens eine Tragplatte (6) aufweist, die aus dem Material des Trägers (2) besteht, wobei der Querträger (1) aus einem Metallstreifen erhalten wird, **dadurch gekennzeichnet, dass** er Mittel (4) zur Befestigung des Trägers (2) am Fahrzeugaufbau aufweist, die wenigstens die Tragplatte (6) umfassen, die mit mindestens einer Befestigungsöffnung (8) versehen ist, und **dadurch**, dass in der oder in jeder Tragplatte (6) der Metallstreifen in zweifacher Dicke umgefaltet ist, die durch einen Luftspalt mit einer Dicke getrennt ist, die kleiner als die zweifache Dicke des Metallstreifens ist.

2. Querträger nach Anspruch 1, **dadurch gekennzeichnet, dass** die Befestigungsmittel (4) zwei längliche Tragplatten (6) umfassen, wobei diese Tragplatten (6) zu beiden Seiten des Trägers (2) angeordnet sind und jeweils mindestens eine Befestigungsöffnung (8) aufweisen.

3. Querträger nach Anspruch 1 oder 2, **dadurch gekennzeichnet, dass** die bzw. jede Tragplatte (6) sich im Wesentlichen über die gesamte Länge des Trägers (2) erstreckt.

4. Querträger nach einem der Ansprüche 1 bis 3, **dadurch gekennzeichnet, dass** er mittels Biegen und Schweißen eines Metallstreifens erhalten wird, wobei die bzw. jede Befestigungsöffnung (8) in dem Metallstreifen vor dem Biegen gebildet wird.

5. Querträger nach Anspruch 4, **dadurch gekennzeichnet, dass** der Metallstreifen über die gesamte Länge des Querträgers (1) stumpf verschweißt ist.

6. Querträger nach einem der Ansprüche 4 oder 5, **dadurch gekennzeichnet, dass** in der bzw. jeder Tragplatte (6) die beiden Dicken des Metallstreifens über die gesamte Länge des Querträgers (1) miteinander verschweißt sind.

7. Querträger nach Anspruch 5, **dadurch gekennzeichnet, dass** die stumpf durchgeführte Schweißung in den Träger (2) hineinreicht.

8. Querträger nach einem der vorhergehenden Ansprüche, **dadurch gekennzeichnet, dass** der Metallstreifen eine in Längsrichtung entlang dem Querträger (1) variierende Dicke aufweist.

9. Querträger nach einem der Ansprüche 1 bis 8, **dadurch gekennzeichnet, dass** der Träger (2) einen trapezförmigen Querschnitt aufweist.

10. Querträger nach Anspruch 9, **dadurch gekennzeichnet, dass** er im Querschnitt ein Hutprofil aufweist und eine erste große Fläche (26) aufweist, die im Wesentlichen eben ist, und eine zweite große Fläche (28), die der ersten gegenüberliegt und auf der der Träger (2) vorspringt.

11. Querträger nach einem der Ansprüche 1 bis 8, **dadurch gekennzeichnet, dass** der Träger (2) einen kreisförmigen Querschnitt aufweist.

12. Querträger nach einem der vorhergehenden Ansprüche, **dadurch gekennzeichnet, dass** der Querträger (1) einen variierenden Querschnitt aufweist, wenn der Querträger (1) der Länge nach durchlaufen wird.

13. Querträger nach Anspruch 12, **dadurch gekennzeichnet, dass** der Querträger (1) mindestens zwei längliche Teilstücke (VII, IX, XI) umfasst, die jeweils konstante und voneinander verschiedene Querschnitte aufweisen.

14. Querträger nach Anspruch 13, **dadurch gekennzeichnet, dass** die zwei länglichen Teilstücke (VII, IX) des Querträgers (1) Querschnitte aufweisen, die jeweils verschiedene Formen aufweisen.

15. Querträger nach Anspruch 14, **dadurch gekennzeichnet, dass** die zwei länglichen Teilstücke (IX, XI) des Querträgers (1) Querschnitte aufweisen, die in einer zur Längsrichtung senkrechten Ebene verschiedene Positionen aufweisen.
